# EUROPÄISCHE PATENTSCHRIFT

(11) **EP 0 652 618 B1**
(45) Veröffentlichungstag und Bekanntmachung des Hinweises auf die Patenterteilung: **26.08.1998**
(21) Anmeldenummer: 94117401.3
(22) Anmeldetag: 04.11.1994
(51) Int. Cl.: H02G 3/08

(54) **Vorrichtung zum Verschliessen einer Öffnung in einer Wand eines Gehäuses**
Closing device for an opening in a box wall
Dispositif de fermeture d'une ouverture dans une cloison de boîtier

(30) Priorität: 10.11.1993 DE 4338208
(43) Veröffentlichungstag der Anmeldung: 10.05.1995
(73) Patentinhaber: CEAG Sicherheitstechnik GmbH, 59494 Soest (DE)
(72) Erfinder: Naumann, Rainer, D-68259 Mannheim (DE); Sauer, Dieter, D-69434 Heddesbach (DE)
(74) Vertreter: Grünecker, Kinkeldey, Stockmair & Schwanhäusser Anwaltssozietät

(56) Entgegenhaltungen:
- EP-A- 0 076 578

## Beschreibung

Die Erfindung betrifft eine Vorrichtung zum Verschließen einer Öffnung in einer Wand eines Gehäuses gemäß dem Oberbegriff des Anspruches 1.

Ein Gehäuse zur Aufnahme von elektrischen Installationsgeräten benötigt an seinen Seitenwänden oder wenigstens an einer seiner Seitenwände Öffnungen, in die Kabeldurchführungen eingesetzt werden können, damit den elektrischen Installationsgeräten im Inneren des Gehäuses Zuund Abführungsleitungen zugeführt werden können. Dies bedeutet normalerweise, daß entsprechend der Anzahl der einzuführenden Leitungen bzw. der im Gehäuse befindlichen Installationsgeräte eine bestimmte Anzahl von Öffnungen vorzusehen ist, was mit einem fertigungstechnischen Aufwand verbunden ist und eine große Lagerhaltung bedingt.

Zur Vereinfachung kann man die eine Seitenwand, durch die die einzelnen Kabel hindurchgeführt werden sollen, mit einer einzigen Öffnung versehen, die ggf. nachträglich ausgebrochen oder ausgefräst werden kann und die mit einer Platte verschlossen wird, in der dann die Kabeldurchführungen eingesetzt werden. Dabei braucht lediglich ein einziges Grundgehäuse hergestellt und auf Lager gelegt werden. Bei Bedarf werden dann lediglich in der Platte ein oder mehrere Durchbrüche eingebracht, in welcher eine Kabeldurchführung eingeschraubt werden kann.

Bei einem aus der Praxis bekannten Gehäuse ist die Platte so ausgebildet, wie im Oberbegriff des Anspruchs 1 angegeben; die Befestigungsplatte erfolgt mittels vom Innenraum des Gehäuses einzuführende Verbindungs- beziehungsweise Befestigungsschrauben; in die Platte selbst sind an den geeigneten Stellen Innengewinde eingesetzt, so daß eine Schraube in dieses Gewinde eingeschraubt werden kann.

Die Montage einer derartigen Platte ist ebenfalls relativ kompliziert und man benötigt auch unterschiedliche Platten mit an unterschiedlichen Stellen eingebrachten Innengewinden, so daß für die Einbringung von Durchbrüchen nur ein begrenzter Platz zur Verfügung steht.

Aus der EP-A-0076578 ist ein gattungsfremder Bausatz, der beispielsweise als Kabeldurchführung dienen kann, zum Einsatz in eine Öffnung in einer Wand offenbart. Der Bausatz besteht aus zwei miteinander verbindbaren Halbschalen, die mittels einer Anzahl von Rasten miteinander verrastet sind. Weiterhin weist der Bausatz ein U-förmiges Befestigungselement auf.

Die Befestigung des Bausatzes in einer Wandöffnung erfolgt in folgender Weise. Zuerst wird der Bausatz teilweise in die Wandöffnung eingeschoben, wobei ein unterer Vorsprung einen unteren Rand der Wandöffnung hintergreift. Anschließend wird der bisher schräg in die Wandöffnung eingeführte Bausatz mit dem unteren Vorsprung als Widerlager so weit in die Wandöffnung hineingekippt, bis ein oberer Vorsprung einen oberen Rand der Wandöffnung hintergreift. In diesem Einbauzustand wird das U-förmige Befestigungselement in seitliche Nuten eingeführt. In der eingeführten Stellung des Befestigungselements hintergreift ein weiterer nasenförmiger Vorsprung des Bausatzes den oberen Öffnungsrand der Wandöffnung und ein Umfangsrand des Bauteils liegt ebenfalls an einem Rand der Wandöffnung an. Weiterhin ist das Befestigungselement im Bereich eines seiner Schenkel mit dem Bausatz über einen Vorsprung verrastbar.

Aufgabe der Erfindung ist es, eine Vorrichtung der eingangs genannten Art zu schaffen, bei der die Fixierung der Platte in der Gehäusewand vereinfacht ist.

Diese Aufgabe wird erfindungsgemäß bei der Vorrichtung mit den Merkmalen des Oberbegriffs des Anspruchs 1 durch die zusätzlichen kennzeichnenden Merkmale dieses Anspruchs gelöst.

Erfindungsgemäß besitzt die Platte eine im Bereich ihres Randes und in Abstand dazu umlaufende, senkrecht zur Plattenebene vorspringende Leiste, die an den im montierten Zustand senkrecht zum Gehäuseboden verlaufenden Leistenabschnitten senkrecht zu den Leistenabschnitten vorspringende, parallel zur Plattenebene verlaufende und bezogen auf die Platte nach außen vorspringende erste Nasen aufweist, die die benachbarte Kante der Öffnung in der Gehäusewand in geeignetem Abstand übergreifen, wobei zwischen der Innenfläche der Wand und den ersten Nasen je ein erster Keil eingeführt werden kann, so daß die Platte in der Öffnung der Wand mittels der beiden ersten Keile fixierbar ist. Zur Montage werden die an einem Leistenabschnitt angeformten ersten Nasen hinter die Kante der Öffnung geführt und dann die Platte gegen die Wand geschwenkt, so daß die an dem gegenüberliegenden Leistenabschnitt befindlichen ersten Nasen in die Öffnung hineingleiten können; nach Zentrierung der Platte bezogen auf die Öffnung in der Gehäusewand werden dann die Keile zwischen die Nasen und die Wand eingeschoben.

Weiterhin besitzt die Leiste in ihrem parallel zum Boden verlaufenden, dem Boden entfernt liegenden Leistenabschnitt zweite Nasen, die in gleicher Weise vorspringen wie die ersten Nasen, und zwischen die Wand und den zweiten Nasen wird ein zweiter Keil zur oberen Fixierung der Platte eingefügt.

Gemäß einer weiteren Ausbildung der Erfindung sind gemäß Anspruch 2 die ersten Keile und der zweite Keil einstückig zu einem U-förmigen Bügel verbunden, wobei die ersten Keile die Schenkel und der zweite Keil den Steg bilden. Im montierten Zustand also greifen die Schenkel zwischen die ersten Nasen und der Wand und der Steg zwischen die zweiten Nasen und der Wand ein, so daß auf diese Weise eine Fixierung der Platte sichergestellt ist.

Eine Verbesserung der Erfindung kann dahin gehen, daß gemäß Anspruch 3 an den ersten Nasen ein L-förmiger Fortsatz angebracht ist, dessen freier Schenkel, parallel zu dem Leistenabschnitt verlaufend, zum Flanschrand, also zur Plattenebene hinweist; die ersten Keile bzw. die Schenkel besitzen dann eine entsprechend angeordnete Längsnut, in die im eingeschobenen Zustand die freien Schenkel der L-Form eingreifen und so der Führung der Schenkel dienen. Aufgrund der L-Form wird verhindert, daß die Schenkel sich aufbiegen bzw. die ersten Keile nach außen auswandern können.

Zur Verbesserung dieser Führung kann an der Innenfläche der Gehäusewand in entsprechendem Abstand ein leistenförmiger, senkrecht zum Boden verlaufender Vorsprung angeformt sein, der die ersten Keile bzw. die Schenkel an ihren Außenflächen führt.

Wenn, wie in Anspruch 5 angedeutet, an dem Deckel, mit dem das Gehäuse verschlossen werden kann, ein entsprechender Deckelvorsprung angeformt ist, dann kann sich die Platte bzw. der Bügel oder die Keile nicht mehr aus ihrer Montagestellung verschieben, so daß eine optimale Fixierung der Platte innerhalb der Öffnung der Gehäusewand gewährleistet ist.

Weitere vorteilhafte Ausgestaltungen der Erfindung und weitere Verbesserungen sind den weiteren Unteransprüchen zu entnehmen.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Figur 1: eine Innenansicht auf eine Seitenwandung eines Gehäuses,
- Figur 2: eine Innenansicht einer Platte,
- Figur 3: eine Aufsicht gemäß Pfeil III und eine Schnittansicht gemäß der Schnittlinie III₁-III₁,
- Figur 4: eine Ansicht gemäß Pfeilrichtung IV mit einer Teilschnittansicht gemäß Schnittlinie IV₁-IV₁,
- Figur 5: eine Einzelheit Z in vergrößerter Darstellung,
- Figur 6: eine Seitenansicht auf einen Bügel,
- Figur 7: eine Ansicht gemäß Pfeilrichtung 7 der Figur 6 mit Teilschnitt gemäß Schnittlinie VII₁,
- Figur 8: eine Ansicht gemäß Pfeilrichtung VIII,
- Figur 9: eine vergrößerte Darstellung gemäß Einzelheit Y,
- Figur 10: eine Schnittansicht im montierten Zustand im Bereich der Schnittlinie IV₁-IV₁ und
- Figur 11: eine Schnittansicht im montierten Zustand entsprechend Schnittlinie VII₁-VII₁ der Figur 6.

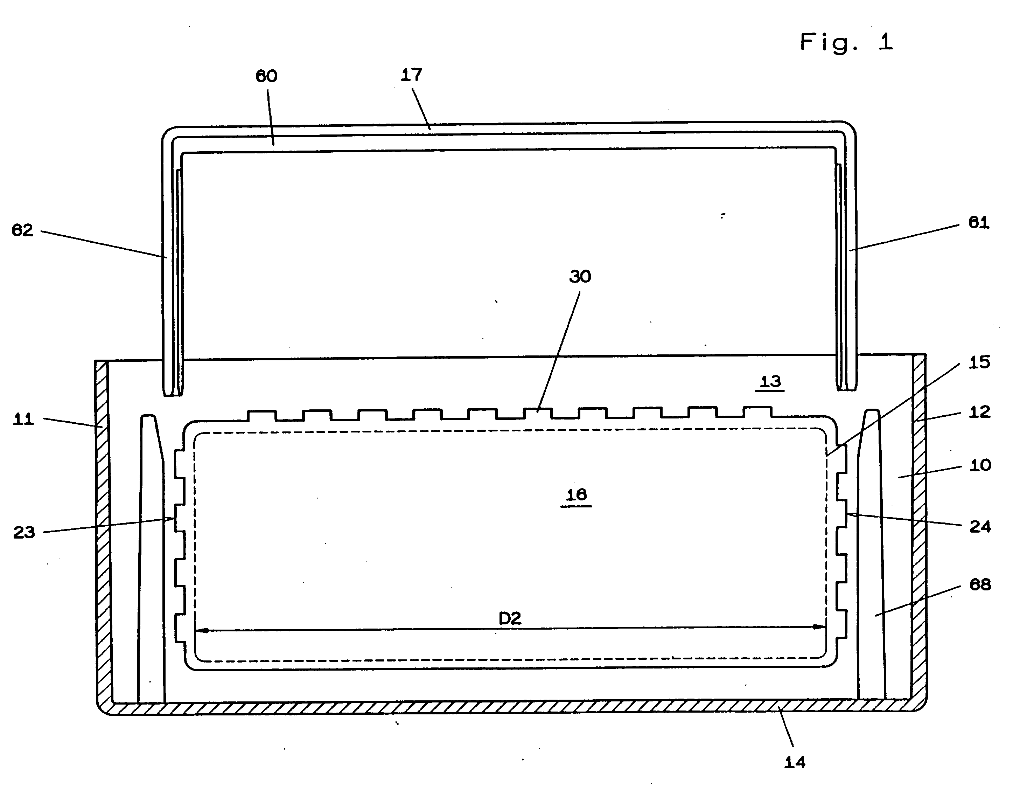

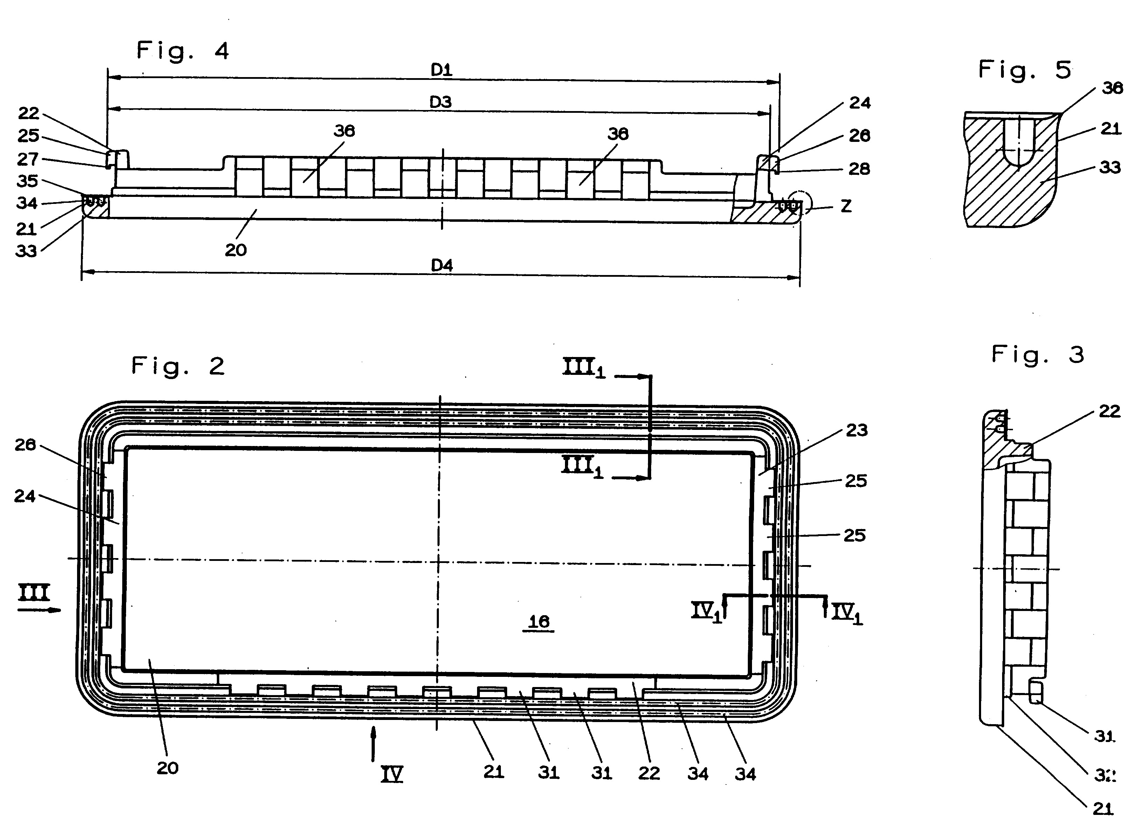

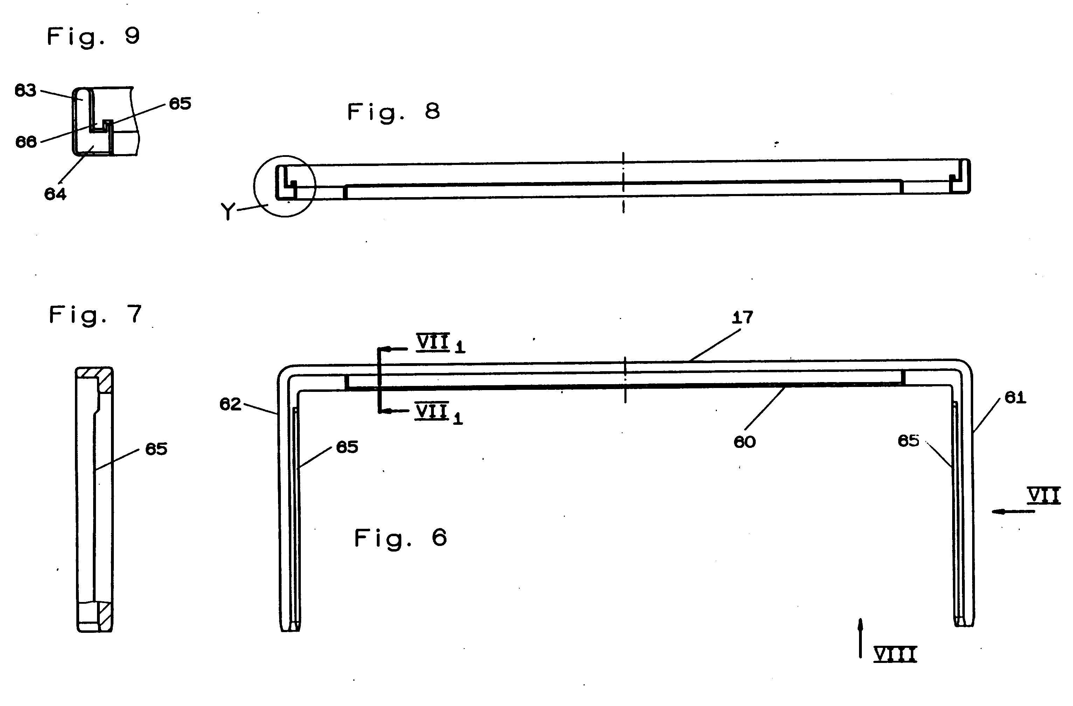

Ein Gehäuse 10 gemäß Figur 1 besitzt Seitenwände 11, 12 und eine Seitenwand 13, die in der Zeichenebene liegt, sowie eine Bodenwand 14. In der Seitenwand 13 befindet sich eine rechteckförmige Öffnung 15, die strichliert dargestellt ist und die mittels einer Platte 16, die in den Figuren 2 bis 5 näher dargestellt ist, verschlossen ist. Die Platte 16 ist an der Seitenwand 13 innerhalb der Öffnung 15 mittels eines Bügels 17 fixiert, der in den Figuren 6 bis 9 näher dargestellt ist.

Es sei nun Bezug genommen auf die Figuren 2 bis 5.

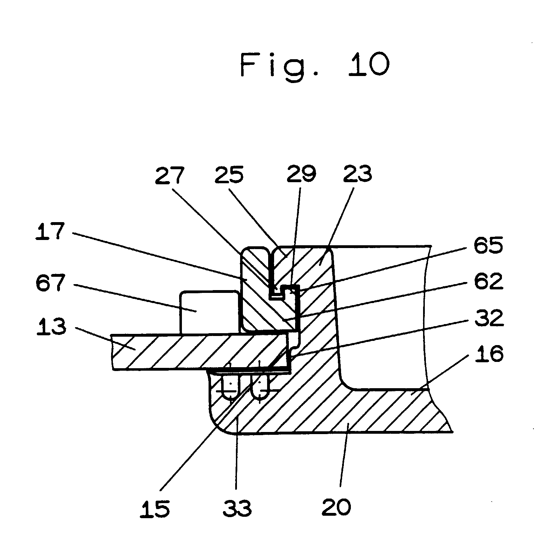

Die Verschlußplatte 16 besitzt einen Plattenbereich 20, der wie aus Figur 1 ersichtlich ist, an seinem Außenumfang größer ist als die Innenkontur der Öffnung 15. In einem Abstand von dem Außenumfangsrand 21 der Verschlußplatte 16 (im folgenden kurz auch Platte 16 genannt) ist eine umlaufende Leiste 22 vorgesehen, die senkrecht zur Plattenebene vorspringt. Dadurch wird zwischen dem Außenumfangsrand 21 der Platte 16 und der Leiste 22 ein umlaufender Flanschrand 33 gebildet, der gegen die Außenfläche der Gehäusewand 13 im montierten Zustand zum Anliegen kommt. Die umlaufende Leiste 22 besitzt, wie aus Figur 1 ersichtlich ist, an den senkrecht zur Bodenwand 14 verlaufenden Leistenabschnitten 23 und 24 vorspringende erste Nasen 25 bzw. 26, die parallel zur Plattenebene und bezogen auf die Platte 16 nach außen vorspringen und eine L-Form mit einem freien Schenkel 27 und 28 aufweisen. In der Figur 10 ist der Leistenabschnitt 23 vergrößert gezeichnet, an dessen freiem Ende parallel zur Plattenebene die erste Nase 25 angeordnet ist, an der der freie Schenkel 27 der L-Form angeformt ist, der wieder zur Plattenebene zurück vorspringt. Dadurch wird eine U-förmige Rinne 29 gebildet.

Der parallel zur Bodenfläche bzw. Bodenwand 14 und an der entgegengesetzten Seite der Platte 16 verlaufende Leistenabschnitt 30 besitzt, wie in Figur 3 ersichtlich, zweite Nasen 31, die bezogen auf die Platte 16 nach außen und parallel zur Plattenebene vorspringen. Am Übergang zwischen der Platte 16 und der umlaufenden Leiste 22 befindet sich eine Stufung 32, deren Stufungsabstand von der Platte 16 kleiner ist als die Dicke der Seiten- oder Gehäusewand 13; die Stufung 32 ist genau der Innenkontur der Öffnung 15 angepaßt, so daß die umlaufende Stufung 32 zur Zentrierung der Platte 16 innerhalb der Öffnung 15 dient.

In dem Flanschrand 33 zwischen der umlaufenden Leiste 22 und dem Außenumfangsrand 21 der Platte 16 sind zwei umlaufende Rillen 34 und 35 vorgesehen, die zur Aufnahme einer Dichtung dienen. Der Abstand D₁ der senkrecht zur Plattenebene verlaufenden Außenflächen der Nasen 25 und 26 voneinander ist größer als der Abstand D₂ der Seitenkanten der Öffnung 15, die senkrecht zur Bodenfläche 14 verlaufen, und der Abstand D₃, d. h. der Außenkontur bzw. Außenfläche des Leistenabschnittes 23 (ohne Nasen 25) zur Außenfläche der Nasen 26 ist etwa gleich groß dem Abstand D₂, so daß nach Einfädeln der Nasen 25 hinter die Wand 13 die Nasen 26 durch die Öffnung der Wand hindurchgeschwenkt werden können, bis der Flanschrand 33 allseitig gegen die Außenfläche der Wand 13 zum Anliegen kommt. Natürlich ist der Abstand D₄ der senkrecht zur Bodenwand verlaufenden Abschnitte des Außenumfangsrandes 21 größer als der Abstand D₁.

Die leistenseitige Außenkante des Flanschrandes 33 besitzt eine lippenartige Spitze 36, die über die im Inneren des Gehäuses befindliche bzw. ins Innere des Gehäuses weisende Plattenfläche geringfügig vorspringt und darüberhinaus auch den Außenumfangsrand 21 des Flanschrandes 33 geringfügig überragt, so daß hier eine optimale Abdichtung gegeben ist.

Es sei nun Bezug genommen auf die Figuren 6 bis 9, in der der Bügel 17 dargestellt ist. Der Bügel 17 besitzt einen Steg 60 und zwei senkrecht daran angeformte Schenkel 61 und 62, wobei der Querschnitt des Bügels, wie aus Figur 7 bzw. Figur 9 ersichtlich, eine L-Form aufweist. Diese L-Form besitzt einen Bügelschenkel 63 und einen Bügelsteg 64, wobei am Bügelsteg 64 ein senkrecht dazu und in die gleiche Richtung wie der Bügelschenkel 63 verlaufender Vorsprung 65 angeformt ist; dieser Vorsprung 65 erstreckt sich, wie aus Figur 6 und 7 ersichtlich ist, über praktisch die gesamte Länge des Schenkels 61 bzw. in entsprechender Form des Schenkels 62. Der Vorsprung 65 bildet mit dem benachbarten Bügelschenkel 63 eine U-förmige Rinne oder Längsnut 66, in die im montierten Zustand der Schenkel 261, 62 in die Rinnen 29 an den ersten Nasen 25, 26 eingreift. Dadurch sind die beiden Schenkel 62 und 61 an den Nasen 25 und 26 geführt und nehmen so die Wand 13 zwischen den Flanschrand 33 und sich zu deren Fixierung. An der Innenfläche der Gehäusewand 13 befindet sich in einem den Abmessungen der Schenkel 61, 62 angepaßten Abstand zur Öffnung 15 eine senkrecht zum Boden verlaufende Führungsleiste 67 bzw. 68 (siehe Figur 1), durch die verhindert wird, daß die Schenkel 61, 62 nach Bruch der Vorsprünge 65, 27 und 28 nach außen auswandern können.

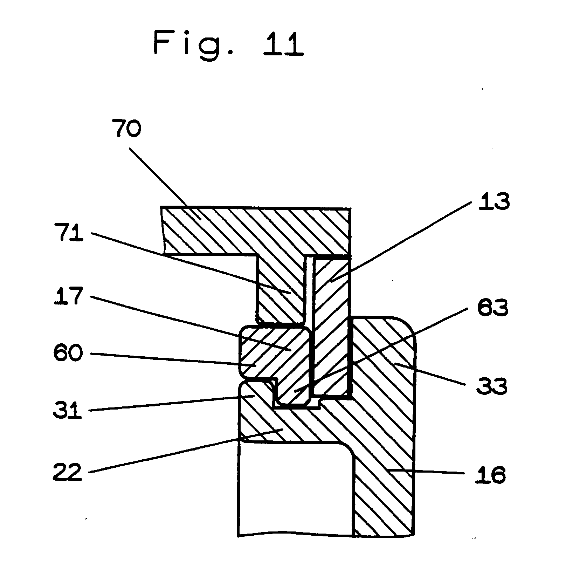

Eine entsprechende L-Form besitzen die zweiten Nasen 31 nicht, und demgemäß besitzt auch der Steg 60 des Bügels 17 einen den Vorsprüngen 65 entsprechenden Vorsprung nicht. Wie aus Figur 11 ersichtlich, greift der Bügelschenkel 63, der am Bügel 17 umläuft, in den Raum zwischen die zweite Nase 31 und der Wand 13, so daß dadurch die Platte 16 auch im Bereich des oberen Leistenabschnittes 30 fixiert ist. Durch das Zusammenwirken des Steges 60 bzw. des Bügelschenkels 63 mit der Nase 31 bzw. den Nasen 31 wird auch eine Versteifung der Wand 13 erzielt.

Wenn das Gehäuse mittels eines Deckels 70 verschlossen ist, dann besitzt der Deckel 70 in bevorzugter Weise einen Vorsprung 71, der im montierten Zustand gegen den Steg 60 des Bügels 17 drückt, so daß der Bügel 17 auch nicht nach oben herauswandern kann.

In der Figur 1 ist ein Pfeil E dargestellt; dieser Pfeil zeigt die Einsetzrichtung des Bügels 17 zur Fixierung der Platte 20.

Nachzutragen ist noch, daß die parallel zum Boden verlaufende Leistenabschnitt 30 auch mit den Nasen 31 so bemessen sind, daß sie in jedem Fall durch die Öffnung 15 hindurch gelangen können.

Mit dem Bügel wird die in die Wandöffnung eingesetzte Platte fixiert. Die beiden Schenkel 61 und 62 werden seitlich zwischen die Wand und die Nasen 25 und 26 hineingeschoben, wobei die Vorsprünge 65 hinter die Vorsprünge 27 und 28 der Leiste greifen; nach Einsetzen des Bügels greift der Steg 60 zwischen die Nasen 31 und den Flanschrand 33 der Platte 16, so daß der Bügel 17 die Platte an der Wand fixiert. Durch die in die umlaufenden Nuten 34 und 35 eingesetzten, in den Figuren nicht dargestellten Dichtungen, wird eine Dichtigkeit IP 54 bzw. IP 55 erreicht.

In die Platte 16 werden bei Bedarf Durchbrüche eingesetzt bzw. gebohrt, in welche Kabeldurchführungen eingeschraubt werden können.

Es können eine erste und eine zweite Nase an den jeweiligen Leistenabschnitten vorgesehen sein, wobei die erste und zweite Nase praktisch den gesamten Leistenabschnitt übergreifen. Aus Gründen der Sicherheit der vereinfachten Fertigung sind zweckmäßigerweise mehrere erste und zweite Nasen an jedem zugehörigen Leistenabschnitt vorgesehen, wobei aus Fertigungsgründen in den Bereichen der Leistenabschnitte, die die Nasen aufweisen, Durchbrüche 36 durch die Leiste 22 vorgesehen sind, die durch in dem Herstellungswerkzeug vorgesehene Schieber bedingt sind, für die Erfindung aber nicht von Bedeutung sind.

## Patentansprüche

1. Vorrichtung zum Verschließen einer rechteckigen Öffnung (15) in einer Wand (13) eines Gehäuses (10) mit einer Verschlußplatte (16), deren Außenumfangskontur größer ist als die lichte Weite der Öffnung, so daß sie mit einem Flanschrand (33) gegen die Außenfläche der Wand (13) im montierten Zustand anliegt, und an deren einen Seite eine senkrecht zu ihrer flächigen Erstreckung (Plattenebene) vorspringende, umlaufende Leiste (22) angeformt ist, deren Außenfläche dem Innenrand der Öffnung angepaßt ist, so daß die Leiste in die Öffnung wenigstens eingreift und die Platte in der Öffnung führt,
**dadurch gekennzeichnet**,
daß die Leiste (22) an den beiden sich gegenüberliegenden, senkrecht zum Gehäuseboden (14) verlaufenden Bereichen (23, 24) senkrecht dazu und bezogen auf die Platte (16) nach außen vorspringende erste Nasen (25, 26) und in dem der Bodenwand (14) des Gehäuses entgegengesetzt liegenden, parallel zur Bodenwand verlaufenden Bereich senkrecht zur Leiste (22) und bezogen auf die Platte (16) nach außen vorspringende zweite Nasen (31) aufweist, wobei die ersten Nasen die benachbarte Kante der Öffnung (15) übergreifen und im montierten Zustand zwischen diesen und der Innenfläche der Wand (13) je ein erster Keil (61, 62) und zwischen den zweiten Nasen (31) und der Innenfläche der Wand (13) ein zweiter Keil einführbar ist zur Fixierung der Platte (16).

2. Vorrichtung nach Anspruch 1, dadurch gekennzeichnet, daß die ersten Keile (61, 62) und der zweite Keil (60) einstückig einen U-förmigen Bügel (17) bilden, dessen Schenkel die ersten Keile und dessen Steg der zweite Keil bilden.

3. Vorrichtung nach einem der Ansprüche 1 order 2, dadurch gekennzeichnet, daß die ersten Nasen (25, 26) eine L-Form aufweisen, deren freier Schenkel (27, 28) parallel zur Leiste (23, 24) verlaufend zum Flanschrand (33) hinweist, und daß die ersten Keile bzw. die Schenkel (61, 62) eine Längsnut (65) aufweisen, in die im eingeschobenen Zustand die freien Schenkel (27) der L-Form der ersten Nasen (25) eingreifen und so zur Führung der ersten Keile bzw. der Schenkel (61, 62) dienen.

4. Vorrichtung nach einem der vorherigen Ansprüche, dadurch gekennzeichnet, daß parallel zu den senkrecht zum Boden verlaufenden Kanten der Öffnung (15) je ein leistenförmiger Vorsprung (67, 68) angeformt ist, der die ersten Keile bzw. die Schenkel (61, 62) an ihren Außenflächen führt.

5. Vorrichtung nach einem der vorherigen Ansprüche, wobei das Gehäuse mittels eines auf den Gehäuserand auflegbaren Deckel (70) verschließbar ist, dadurch gekennzeichnet, daß am Deckel weitere Vorsprünge (71) angeformt ist, die im montierten Zustand gegen den Steg anliegen und den Bügel (17) festhalten.

6. Vorrichtung nach einem der vorherigen Ansprüche, dadurch gekennzeichnet, daß der Leiste (22) im Bereich des Leistenfußes eine außen umlaufende Stufung (32) vorgesehen ist, der in die Öffnung (15) hineinpaßt und zur Zentrierung der Platte (16) in der Öffnung (15) dient.

## Claims

1. Device for closing a rectangular opening (15) in a wall (13) of a housing (10) with a closure plate (16) whose outer circumferential contour is larger than the inside width of the opening, so that it abuts by a flange edge (33) against the outer surface of the wall (13) in the assembled state, and with one of whose sides is integrally formed a peripheral strip (22) which projects perpendicularly to its planar extent (plane of plate) and whose outer surface is adapted to the inner edge of the opening, so that the strip at least engages in the opening and guides the plate in the opening, characterised in that the strip (22) comprises, in the two mutually opposed regions (23, 24) extending perpendicularly to the housing bottom (14), first lugs (25, 26) projecting perpendicularly thereto and outwardly relative to the plate (16) and, in the region located opposite the bottom wall (14) of the housing and extending parallel to the bottom wall, second lugs (31) projecting perpendicularly to the strip (22) and outwardly relative to the plate (16), wherein the first lugs overlap the adjacent edge of the opening (15) and in the assembled state between the latter and the inner surface of the wall (13) can be introduced in each case a first key (61, 62) and between the second lugs (31) and the inner surface of the wall (13) a second key for fixing the plate (16).

2. Device according to claim 1, characterised in that the first keys (61, 62) and the second key (60) form in one piece a U-shaped frame (17) whose arms form the first keys and whose web forms the second key.

3. Device according to either of claims 1 or 2, characterised in that the first lugs (25, 26) have an L shape whose free arm (27, 28) running parallel to the strip (23, 24) points towards the flange edge (33), and in that the first keys or the arms (61, 62) comprise a longitudinal groove (65) in which the free arms (27) of the L shape of the first lugs (25) engage in the inserted state and so serve to guide the first keys or the arms (61, 62).

4. Device according to any of the preceding claims, characterised in that parallel to the edges of the opening (15) running perpendicularly to the bottom is integrally formed in each case a strip-like projection (67, 68) which guides the first keys or the arms (61, 62) on their outer surfaces.

5. Device according to any of the preceding claims, wherein the housing is closable by means of a cover (70) which can be placed on the housing edge, characterised in that on the cover are integrally formed further projections (71) which in the assembled state abut against the web and hold tight the frame (17).

6. Device according to any of the preceding claims, characterised in that on the strip (22) in the region of the strip base is provided a peripheral step (32) on the outside which fits in the opening (15) and serves-to centre the plate (16) in the opening (15).

## Revendications

1. Dispositif destiné à fermer une ouverture (15) rectangulaire dans une paroi (13) d'un boîtier (10) comportant une plaque de fermeture (16) dont le contour extérieur est supérieur à la cote intérieure de l'ouverture, de sorte qu'elle s'applique à l'état monté par un bord de bride (33) contre la surface extérieure de la paroi (13), et sur un côté de laquelle est formée une baguette (22) périphérique, faisant saillie perpendiculairement à son extension à plat (plan de la plaque), dont la surface extérieure est adaptée au bord intérieur de l'ouverture, de sorte que la baguette s'engage au moins dans l'ouverture et guide la plaque dans l'ouverture,
caractérisé
en ce que la baguette (22) présente, sur les deux zones (23, 24) opposées l'une à l'autre, s'étendant perpendiculairement au fond (14) du boîtier, des premiers ergots (25, 26) faisant saillie perpendiculairement à ces zones et vers l'extérieur par rapport à la plaque (16), ainsi que dans la zone opposée au fond (14) du boîtier, s'étendant parallèlement au fond, des deuxièmes ergots (31) faisant saillie perpendiculairement à la baguette (22) et vers l'extérieur par rapport à la plaque (16), les premiers ergots passant sur le bord voisin de l'ouverture (15) et à l'état monté, un premier coin (61, 62) pouvant être introduit entre ces premiers ergots et la surface intérieure de la paroi (13) et un deuxième coin pouvant être introduit entre les deuxièmes ergots (31) et la surface intérieure de la paroi (13) pour fixer la plaque (16).

2. Dispositif selon la revendication 1, caractérisé en ce que les premiers coins (61,,62) et le deuxième coin (60) forment d'un seul tenant un étrier (17) en U dont les branches constituent les premiers coins et son dos le deuxième coin.

3. Dispositif selon l'une des revendications 1 ou 2, caractérisé en ce que les premiers ergots (25, 26) présentent une forme en L dont la branche libre (27, 28), parallèle à la baguette (23, 24), est dirigée vers le bord de bride (33), et en ce que les premiers coins ou les branches (61, 62) présentent une rainure longitudinale (65), dans laquelle s'engagent à l'état introduit les branches libres (27) de la forme en L des premiers ergots (25) et servent ainsi au guidage des premiers coins ou des branches (61, 62).

4. Dispositif selon l'une des revendications précédentes, caractérisé en ce que parallèlement à chacune des bords de l'ouverture (15), perpendiculaires au fond, est formée une saillie (67, 68) en forme de baguette, qui guide les premiers coins ou les branches (61, 62) sur leurs surfaces extérieures.

5. Dispositif selon l'une des revendications précédentes, dans lequel le boîtier peut être fermé au moyen d'un couvercle (70) à placer sur le bord du boîtier, caractérisé en ce que sur le couvercle sont formées d'autres saillies (71), qui à l'état monté s'appliquent contre le dos et fixent l'étrier (17).

6. Dispositif selon l'une des revendications précédentes, caractérisé en ce que sur la baguette (22) il est prévu, dans la zone de son pied, un gradin (32) périphérique, extérieur, qui s'ajuste à l'intérieur de l'ouverture (15) et qui sert au centrage de la plaque (16) dans l'ouverture (15).
